# EUROPEAN PATENT APPLICATION

(11) **EP 2 698 755 A1**
(43) Date of publication of application: **19.02.2014**
(21) Application number: 12180922.2
(22) Date of filing: 17.08.2012
(51) Int. Cl.: G06Q 20/10, G06Q 20/22, G06Q 20/32, G06Q 20/42

(54) **Mobile Payment System**

(71) Applicant: redpixtec. GmbH, 65195 Wiesbaden (DE)
(72) Inventor: Toepper, Torben, 61348 Bad Homburg (DE); Klein, Sylvia, 65193 Wiesbaden (DE)
(74) Representative: Weilnau, Carsten

(57) **Abstract**

The present invention relates to mobile payment system, to a computer program product and to a method of processing a mobile payment. The mobile payment system comprising:
- a first mobile device (16) configured to visually display encoded vending details (56) and being further configured to communicate with a remote payment host (20),
- a second mobile device (18) configured to scan or to capture the encoded vending details (56) provided by the first mobile device (16) and being further configured to communicate with the remote payment host (20) for executing a payment order according to the vending details (56),
- wherein the first and the second mobile devices (16, 18) are configured to receive and to display a transaction confirmation (70, 72) provided by the remote payment host (20) in response of a successful payment procedure.

## Description

The present invention relates to a mobile payment system enabling any two users having access to a payment host to execute monetary transactions. Furthermore, the invention relates to a computer program to run on a first and on a second mobile device as well as to a method for processing a payment by making use of a first and a second mobile device.

### Background

There exists a variety of mobile payment systems allowing a user to execute monetary transactions. But most of these systems require that a vendor of a particular product or service provides a payment infrastructure. In particular, various brands and online shops come along with unique and competitive mobile payment solutions, each of which may require time-elaborate, expensive and time consuming adaption of hardware and software. Additionally, a merchant willing to utilize such mobile payment systems has to take part in a plurality of different and heterogeneous payment systems. Among a variety of such different available mobile payment systems, the customer may easily lose overview thus getting rather susceptible and vulnerable to fraud.

Document US 2012/0054046 A1 discloses for instance a mobile payment system making use of picture messaging. There, a mobile device equipped with at least a display and an input is used to connect a server on a mobile network. Upon authentication of a user of the mobile device, the server generates a payment key, encodes the key in an image, such as a barcode, and transmits the image to the mobile device. The user then holds the display of the mobile device up to an optical scanner at a point of sales (POS) terminal. Logic on the POS terminal extracts the payment key from the image and uses the payment key to bill the user.

The POS terminal transmits the bill with the payment key to the server on the network. The server ensures that the key is active, and debits an account for the user based on the amount presented in the bill. For such a system to work the user as well as the POS terminal have to connect to a remote server. The payment key is generated remote by the server and has to be transmitted to the user. This may eventually imply a security gap. Moreover, installing of such a system requires a terminal at the point of sales equipped with e.g. a barcode scanner.

### Objects of the Invention

It is therefore an object of the present invention to provide a simplified, secure, fraud-proof and user-friendly mobile payment system which requires less hardware modifications and which may be implemented with existing everydays hardware components available by a large group of potential users. It is a particular aim of the present invention to reach a large group of users and a particularly high level of acceptance.

### Summary of the Invention

In a first aspect a mobile payment system is provided which comprises a first mobile device configured to visually display encoded vending details and being configured to communicate with a remote payment host. The payment system further comprises a second mobile device configured to scan or to capture the encoded vending details provided by the first mobile device. Also the second mobile device is configured to communicate with the remote payment host.

The at least second mobile device is further configured to execute a payment order according to the scanned or captured vending details. This way, individually determined vending details may be presented on a first mobile device in an encoded form to be scanned or captured by a second mobile device, which according to the retrieved vending details, may initiate a payment or transaction.

Additionally, first and second mobile devices are configured to receive and to display a transaction confirmation provided by the remote payment host in response of execution of a successful payment. Otherwise, if the payment is - for which ever reason - unsuccessful, a corresponding failure information is transmitted to and displayed by the first and/or second mobile device.

The present mobile payment system may be installed on the basis of first and second mobile devices only. Here, first and second mobile devices may be substantially identical and may provide individually selectable functionalities, either to serve as a mobile device of a merchant or to serve as a mobile device of a customer. Typically, and in the context of the present application, the first mobile device is to be used by a merchant or vendor, e.g. offering a particular product or service at a given price or rate whereas the second mobile device is typically used by a customer or purchaser for initiating or executing a payment order.

It is of particular benefit here, that first and second mobile devices do not need to communicate with each other except for displaying and capturing a visual code. In this way, the mobile payment system may be implemented on the basis of arbitrary mobile devices of different types and from different manufacturers as long as the respective device is able to display encoded vending details and to capture or to scan the encoded vending details. Typically, first and/or second mobile devices comprise a graphical display and a camera.

Moreover, first and second mobile devices may optically or visually exchange all vending related details in a stand-alone mode. Hence, the transfer of vending details between first and second mobile devices does not require to exchange information with the remote payment host. In preferred embodiments, transfer of vending details between a merchant and a customer is conducted all optically via the displayed and encoded vending details to be captured or scanned by the second mobile device.

Moreover, such a transfer of vending details is highly secure and fraud-proof. For scanning the encoded vending details it is required that first and second mobile devices are in direct eye- or sight contact. Moreover, capturing or scanning of the encoded vending detail requires, that first and second mobile devices are brought and positioned in close proximity to each other e.g. by merchant and customer.

It is upon successful scanning or capturing of the encoded vending details by the second mobile device, that a payment order can be executed. Preferably, prior to executing and launching a payment order, the decoded vending details are provided on a display of the second mobile device for informing the customer about the details of the transaction. The second mobile device preferably provides a kind of payment prompt which is to be activated by e.g. the customer in order to execute the payment via the remote payment host.

Preferably, it is only upon starting of the transaction that the second mobile device starts to communicate with the payment host. The payment host then checks the authentication of first and/or second mobile device as well as respective user IDs and related account details prior to execute the transaction.

After successfully transferring an amount according to the given vending details the payment host transmits respective transaction confirmations to the first and to the second mobile device, thus instantly informing the respective users of the executed transaction. Displaying of encoded vending details, scanning thereof, executing of a payment order and receiving of a transaction confirmation may take place in real-time and may not take more than a few seconds or minutes. This way, the present mobile payment system may reach a high acceptance level for both, merchants and customers and may have the potential to substitute and replace cash transfer in everyday life.

In a preferred embodiment the first mobile device is adapted to generate a one-or two-dimensional visual code of vending details. The vending details, such like payment details, containing for instance an account number of a merchant, the amount to be paid as well as other billing details, such like invoice numbers, etc are included in the code. Some of the vending details may be at least partially entered into the first mobile device by the merchant while other vending details, such like payment details, like an account number are pre-configured and stored in the device.

Preferably, the first mobile device is configured and adapted to autonomously generate the one- or two-dimensional code by means of a particular encoding algorithm which is implemented in the first mobile device. Since the first mobile device provides an individual and on-demand generation of a vending detail code, respective vending details may be individually modified by the merchant from time to time. Moreover, when a customer intends to purchase a plurality of items or intends to order a variety of services, the merchant may sum up the individual amounts to a grand total and may charge a respective sum which is to be paid by a single transaction.

In a further preferred embodiment, the second mobile device is configured or adapted to decode the scanned or captured code and is further operable to provide the decoded vending details to a customer. This way, the customer can be comprehensively informed about all relevant vending- or payment details prior to initiate or to execute a payment order.

The communication between the first and/or second mobile device and the remote payment host may then be encrypted or encoded again in order to enhance payment safety.

In another preferred embodiment, the vending details being encoded and/or decoded by the first and/or by the second mobile device, respectively, comprise at least an identification of account holder and/or account number of the respective account holder, typically of the merchant or vendor. Moreover, the vending details further comprise a payment amount in a given or in varying currencies.

Preferably, the users of first and second mobile devices, in particular a merchant and a customer, each comprise at least one account at the remote payment host. When executing or initiating a payment order, the scanned or captured vending details may be modified and appended with payment details of the user of the second mobile device. When submitting the payment order to the remote payment host, the second mobile device may autonomously add details of e.g. the customer.

This way, the payment host may receive a payment order comparable to a conventional bank transfer being indicative of payment information, hence payment accounts and account numbers of merchant and customer, the amount to be transferred between said accounts and a unique identification or reference of the transfer.

Naturally, the payment host might only be accessible by the first and/or second mobile device through an identification or authorization procedure. Upon executing a payment order, at least the second mobile device may have to pass a login procedure with the remote payment host.

In a further preferred embodiment, the first mobile device is configured to generate a one-time code of vending details. This way, an additional security instrument can be implemented.

In still another embodiment, the first mobile device is further configured to transmit a first transaction identifier to the payment host when displaying the encoded vending details. This way, the remote vending host is informed that at least a sales offer is provided by the first mobile device. Receipt of a first transaction identifier may then open a payment window for a predetermined period of time. Generally, it is to be assumed, that the time between generation of the encoded vending details, scanning thereof and initialization of a respective payment order by means of the second mobile device occurs within the predetermined period of time. If the remote payment host will not receive a payment order that corresponds to the first transaction identifier, the payment host may autonomously refuse execution of a respective payment order when receiving the matching payment order at a later unexpected stage, simply for reasons of security.

In a further preferred embodiment also the second mobile device is configured to transmit a second transaction ID to the payment host which is derivable from the scanned encoded vending details provided by the first mobile device. Then, the remote payment host may only have to compare whether first and second transaction identifiers mutually match.

In another preferred embodiment, the first and/or the second mobile device comprise a handheld electronic device, such like a smart phone, a personal digital assistant (PDA), a tablet computer or a portable computer or comparable devices, each of which having at least a camera and a display for scanning and displaying the visual one- or two-dimensional code.

Typically, the code is provided in form of a one-dimensional barcode or by means of a two-dimensional QR- or data matrix code.

By making use of smart phones or comparable electronic devices, the mobile payment system may be easily set up by making use of existing hardware being available to a large group and to a variety of different merchants and customers. The present mobile payment system may be coupled and connected with existing remote payment hosts, operable to communicate with end users and hardware devices either directly, e.g. by means of wireless broadcasting or by means of some kind of communication network, e.g. the internet or the like.

Moreover, and according to another preferred embodiment, the first and/or the second mobile device are configured to communicate with a plurality of different payment hosts. This way, the mobile payment system can be set up on the basis of different existing payment hosts. In this context, it is even conceivable, that either merchant or customer may individually select which kind of payment host is to be selected for a payment process. Preferably, merchant and customer should agree on a common payment host in advance so that the transaction can be executed by a single payment provider.

This way, the mobile payment system is individually and universally adaptable to a large variety of existing remote payment hosts, thereby increasing flexibility and user acceptance of the payment system.

In another, yet independent aspect also a computer program to run on a first and on a second mobile device is provided. Said computer program comprises computer program means to visually display encoded vending details on the first mobile device. The computer program further comprises computer program means to scan or to capture the encoded vending details to the second mobile device. Furthermore, computer program means are provided which enable the first and the second mobile device to communicate with a remote payment host for initiating at least one payment in accordance to the vending details and for displaying a transaction confirmation on the first and/or on the second mobile device in response of a successful payment.

Preferably, the computer program can be provided as a downloadable application to be installed as a program running on a smart phone, a PDA, a tablet computer or a portable computer. Moreover, the computer program may be provided as a single program. When for instance installed on or in a respective hardware device, the program may be configurable either to act as the first, hence the merchant's device or to act as the second, hence the customer's device. This way, it is also conceivable, that merchant and customer may swap roles even by making use of one and the same mobile device.

In a preferred aspect the computer program further comprises computer program means for generating and decoding a one- or two-dimensional visual code of vending details. For encoding and/or decoding the vending details the computer program is running may stand-alone without access to a remote host or database. Alternatively, the computer program may also be in contact with a payment host. When running the same coding and decoding algorithm on both, the first and the second mobile device, encoding and decoding of the vending details can be enabled even without access to a remote payment host.

In another independent aspect a method for processing a payment by means of a first and a second mobile device is provided. The method comprises the steps of visually displaying encoded vending details on the first mobile device and scanning the encoded vending details provided on the first mobile device by the second mobile device.

After scanning or capturing the encoded vending details, in a next step, a payment order is transferred to a remote payment host to which users of first and second devices have access to. Thereafter, the payment order is processed by the payment host, preferably after checking authentication of the users and/or of first and second devices. After that, a transaction confirmation is transferred to the first and/or to the second mobile device in response of a successful transaction. This way, users of first and second mobile devices will be instantly informed about a successful payment. In a real-life situation, a merchant may hand over paid products or services to the customer after having received the transaction confirmation.

In another preferred embodiment a one- or two-dimensional visual code of vending details is generated by the first mobile device on request of a merchant when entering at least one vending detail, such like a price information of a particular product, item or service.

Finally, it is to be mentioned that all features, benefits and general properties as described in connection with the mobile payment system also refer to the mentioned computer program and to the methods of processing a payment. Mentioning of particular features, benefits and structural details described in connection with e.g. the mobile payment system also refers in the same and analogous way to the method for processing a payment as well as to the computer program to run on a first and on a second mobile device; and vice versa.

### Brief Description of the Drawings

In the following, preferred embodiments of the invention will be described in detail by making reference to the drawings, in which:
- Figure 1: schematically illustrates a mobile payment system,
- Figure 2: shows another embodiment of the payment system,
- Figure 3: is illustrative of the various method steps to be executed by first and second mobile devices and by the remote payment host and
- Figure 4: gives another illustration of various method steps to be conducted by the first mobile device, the second mobile device and the remote payment host to execute a payment.

### Detailed Description

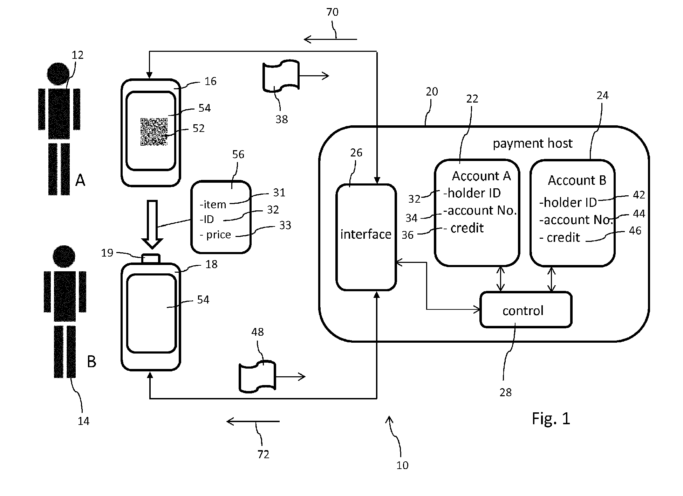

Figure 1 schematically illustrates a mobile payment system 10 based on a first mobile device 16 and a second mobile device 18, As illustrated in Figure 1, a first user, e.g. a merchant 12 is making use of the first mobile device 16 whereas a second user, e.g. a customer 14 makes use of the second mobile device 18. Preferably, first and second mobile devices 16, 18 comprise a smart phone or the like.

In a typical vending or purchasing situation, the merchant 12 makes an offer to the customer 14. If merchant 12 and customer 14 agree on the details of a purchase the merchant 12 may enter vending details 56 into his first mobile device 16. Vending details 56 may comprise information about an item or a service 31 provided by the merchant 12. The vending details 56 may further be indicative of an account identification 34 of the merchant 12. Furthermore the vending details 56 are indicative of the price 33 to be paid by the consumer 14.

After entering at least one of said vending details 56, typically at least the price 33, the first mobile device 16 is configured and is operable to generate a code 52 of the vending details 56 which is displayed either one- or two-dimensionally on a display 54 of the respective device 16. For getting the necessary vending details and payment information the customer 14 may bring his second mobile device 18 in close proximity to the display 54 of the first mobile device 16. Since at least the second mobile device 18 comprises a camera 19, the second mobile device may capture or scan the code 52 of vending details 56 displayed on the first mobile device 16.

Upon capturing the code 52, the second mobile device 18 may decode the captured information and may display the vending details 56 to the customer 14. The customer 14 may then choose to initiate and to process a payment procedure. Hence, the customer 14 may directly use his mobile device 18 to transmit a payment order to a remotely located payment host 20. The payment host 20 typically comprises a communication interface 26 to receive payment orders and to communicate with first and second mobile devices 16, 18.

Upon receipt of a payment order submitted by the second mobile device 18 the payment host 20 may check authentication of the customer 14 and/or of the merchant 12. For this purpose, the payment host 20 comprises a control unit 28, which is operable to actually process payment orders.

In order to execute a payment, merchant 12 and customer 14 each should comprise an account 22, 24 at the payment host 20. Each account 22, 24 is typically identified by an account holder identification 32, 42, by a particular account number 34, 44 and by a credit amount 36, 46. If for instance the credit balance 46 of the account 24 of the customer 14 allows for an intended transaction, the control unit 28 will execute a requested payment order in a rather conventional way.

Upon successful completion of a payment order, the control unit 28 submits a respective confirmation to the communication interface 26, which in turn, forwards respective payment confirmations 70, 72 to both, the merchant 12 and to the customer 14.

Preferably, the transaction is executed almost instantly and in real-time so that merchant 12 and customer 14 receive a transaction confirmation 70, 72 shortly after exchanging encoded vending details 56.

As further illustrated in Figure 1, the mobile devices 16, 18 may individually communicate with the payment host by any available communication technique. For instance, the communication between first and/or second mobile devices 16, 18 and the payment host may be based on wireless communication, such like GSM, UMTS or comparable cellular phone standards like NMT, IS-95 or IS-2000. Moreover, also a text-based communication, such like the short message service (SMS) may be generally applicable.

As further shown in Figure 1, it is also conceivable, that the first mobile device 16 autonomously transmits a first transaction identifier 38 to the payment host 20 when displaying the encoded vending details 56, thereby opening a predefined time window on the payment host 20. After having scanned or captured the encoded vending details 56 and after having prompted a transaction order the second mobile device 18 may also transmit a second transaction identifier 48 to the payment host. If the second transaction identifier 48 is received and processed within the given time window, the transaction will be promptly executed. Otherwise, an error message will be generated and the transaction will be refused.

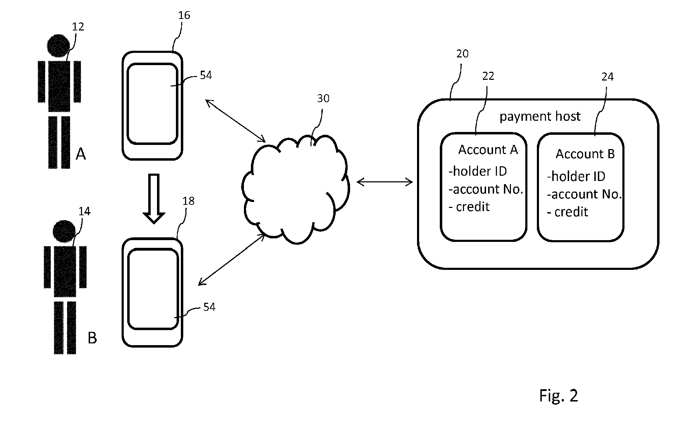

In Figure 2 an embodiment is illustrated, wherein communication between the first mobile device 16 and the payment host 20 is based on a communication network 30, to which both, the mobile device 16 and the remote payment host 20 have access to. The same may also be valid for the second mobile device 18, which may also communicate with the remote payment host 20 via the network 30, such like via the internet. Remarkably, first and second mobile devices 16, 18 do not have to communicate directly except for graphically exchanging displayed and encoded information.

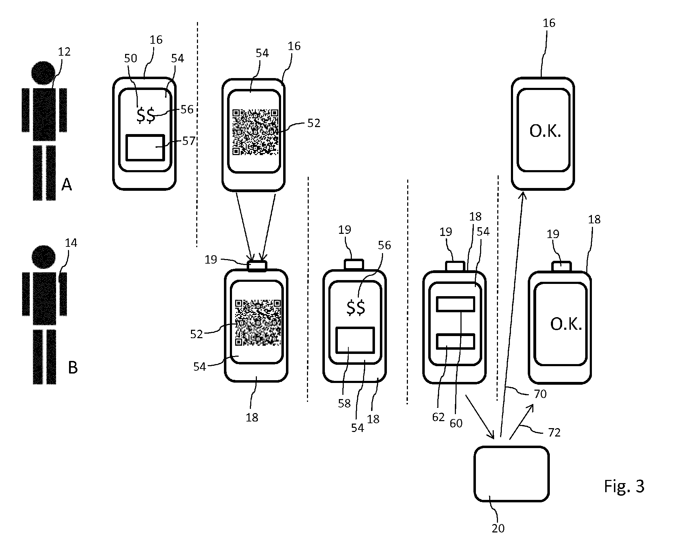

In Figure 3 a typical transaction process is schematically illustrated.

At the beginning of a payment procedure, the merchant 12 may enter at least one vending detail 56 into an entry mask 50 illustrated on the display 54 of the first mobile device 16. In a proceeding step, the mobile device 16 may then autonomously or on request generate a two-dimensional code 52, e.g. a QR-code which is illustrated on the display 54 of the first mobile device 16. For generating the code the merchant 12 may confirm or trigger an encoding and display procedure by electing or choosing an prompt 57 provided on the display 54.

The customer 14 by making use of his mobile device 18 may then capture or scan the code 52 by making use of a camera 19 installed with the second mobile device 18. The scanned code 52 may be displayed on the display 54 of the second mobile device 18. The customer 14 may then trigger a decoding routine running on the mobile device 18 in order to retrieve the original vending details 56. As illustrated in Figure 3 in the proceeding step, vending details 56, such like a price information 33, billing number 31 and payment details will be illustrated on the display 54. Additionally, the mobile device 18 may provide a payment prompt 58 by way of which the customer 14 may initiate a payment order.

Upon initiating a payment order, e.g. by choosing or electing the payment prompt 58 the mobile device 18 will connect to the remote payment host 20. Here, the mobile device 18 may be pre-configured to conduct a login procedure on the payment host 20. Typically, the mobile device 18 will provide or will ask for a login name 60 together with a password to get access to the payment host 20. Generally, a large variety of available and fraud-proof login procedures may be implemented at this stage.

Password 62 as well as login name 60 may be also securely stored in the mobile device 18. Additionally or alternatively, the mobile device 18 may always request a personal identification number (PIN) or similar passphrases in order to inhibit unauthorized use of the payment system, especially in the event, that the mobile device 18 gets lost.

The payment host 20 then processes the payment order and sends transaction confirmations 70, 72 to both, the first mobile device 16 and to the second mobile device 18, respectively. This way, both, the merchant 12 and the customer 14 get a respective confirmation on the executed transaction.

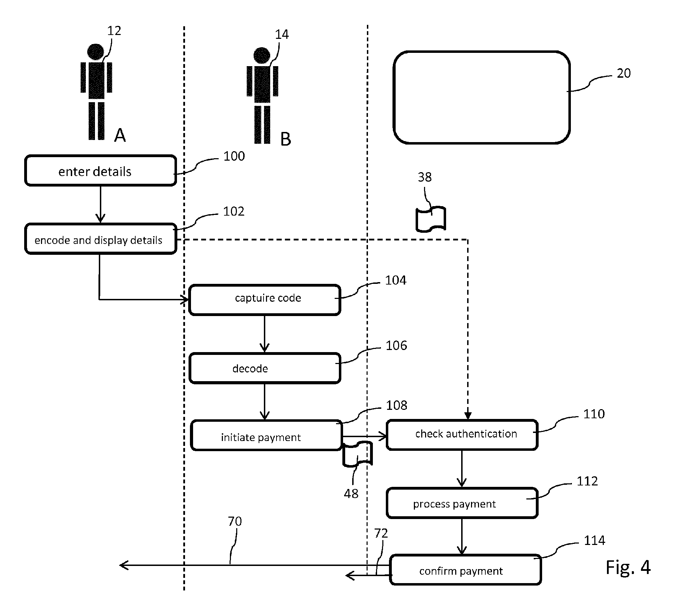

Figure 4 is finally illustrative of a flowchart of various actions executed by the at least three participants of a mobile payment process. In a first column, the activities of a merchant 12 and its first mobile device 16 are schematically illustrated, in a second column respective actions of the customer 14 and his second mobile device 18 are indicated and in the third column the activities of the payment host 20 are schematically illustrated.

As shown in Figure 4 the procedure starts with a first step 100 by entering at least one vending detail 56 into the first mobile device 16. In a proceeding step 102 the vending details 56 are encoded by the first mobile device 16. In the same step the encoded vending details 56 are visually provided on a display 54 of the first mobile device 16. Then, in step 104 the visualized encoded vending details 56 are captured or scanned by a camera 19 of the second mobile device 18.

In the following step 106 the retrieved encoded information is decoded and displayed to the customer 14. Then, in step 108 the customer 14 may prompt and initiate a payment order according to the retrieved and decoded vending details 56. This step may further be accompanied by transmitting of a second transaction identifier 48 to the payment host 20. Optionally and as indicated by the dashed arrow also the first mobile device 16 may transmit a first transaction identifier 38 to the payment host 20 upon displaying the vending details 56 on the display 54.

The payment host 20 in steps 110 and 112 processes the payment order and may first check the authentication and authorization of merchant 12 and customer 14 and their respective mobile devices 16, 18.

In a following step 112 the payment transaction is actually executed by the payment host before in a final step 114 respective transaction confirmations 70, 72 are transmitted to the mobile devices 16, 18 of merchant 12 and customer 14, respectively.

While at least one exemplary embodiment has been presented in the foregoing summary and detailed description, it should be appreciated that a vast number of variations may exist. It should also be appreciated that the exemplary embodiments are only examples, and are not intended to limit the scope, applicability, or configuration of the invention in any way. Rather, the foregoing summary and detailed description will provide those skilled in the art with a convenient instruction for implementing of at least one exemplary embodiment. It is to be understood, that various changes may be made in the function and arrangement of elements described in an exemplary embodiment without departing from the scope as set forth in the appended claims and their legal equivalence.

### List of Reference Numerals

- 10: mobile payment system
- 12: merchant
- 14: customer
- 16: mobile device
- 18: mobile device
- 19: camera
- 20: payment host
- 22: account
- 24: account
- 26: communication interface
- 28: control unit
- 30: communication network
- 31: item
- 32: holder identification
- 33: price
- 34: account number
- 36: cred it
- 38: transaction identifier
- 42: holder identification
- 44: account number
- 46: cred it
- 48: transaction identifier
- 50: entry mask
- 52: code
- 54: display
- 56: vending details
- 57: prompt
- 58: payment prompt
- 60: login name
- 62: password
- 70: confirmation
- 72: confirmation

## Claims

1. A mobile payment system, comprising:
- a first mobile device (16) configured to visually display encoded vending details (56) and being further configured to communicate with a remote payment host (20),
- a second mobile device (18) configured to scan or to capture the encoded vending details (56) provided by the first mobile device (16) and being further configured to communicate with the remote payment host (20) for executing a payment order according to the vending details (56),
- wherein the first and the second mobile devices (16, 18) are configured to receive and to display a transaction confirmation (70, 72) provided by the remote payment host (20) in response of a successful payment procedure.

2. The mobile payment system according to claim 1, wherein the first mobile device (16) is adapted to generate a one- or two-dimensional visual code (52) of vending details (56) at least partially entered by a merchant (12).

3. The mobile payment system according to any one of the preceding claims, wherein the second mobile device (18) is adapted to decode the scanned or captured code (52) and to provide the vending details (56) to a customer (14).

4. The mobile payment system according to any one of the preceding claims, wherein the vending details (56) comprise at least an account holder ID (32) and/or an account number (54) of the merchant (12) and further comprise a payment amount (33).

5. The mobile payment system according to any one of the preceding claims, wherein the first mobile device (16) is configured to generate a one-time code (52) of vending details (56).

6. The mobile payment system according to any one of the preceding claims, wherein the first mobile device (16) is configured to transmit a first transaction identifier (38) to the payment host (20) when displaying the encoded vending details (56).

7. The mobile payment system according to any one of the preceding claims, wherein the second mobile device (18) is configured to transmit a second transaction identifier (48) to the payment host (20), which is derivable from the scanned or captured encoded vending details (56).

8. The mobile payment system according to any one of the preceding claims, wherein the first and/or the second mobile devices (16, 18) comprise a handheld electronic device, a smart phone, a personal digital assistant (PDA), a tablet computer or a portable computer, each having a camera (19) and a display (54).

9. The mobile payment system according to any one of the preceding claims, wherein the first and/or the second mobile devices (16, 18) are configured to communicate with a plurality of different payment hosts (20).

10. A computer program to run on a first and on a second mobile device (16, 18), and comprising:
- computer program means to visually display encoded vending details (56) on the first mobile device (16),
- computer program means to scan or to capture the encoded vending details (56) into the second mobile device (18),
- computer program means enabling the first and the second mobile device (16, 18) to communicate with a remote payment host (20) for initiating at least one payment order in accordance to the vending details (56) and
- computer program means for displaying a transaction confirmation (70, 72) on the first and/or the second mobile device (16, 18) in response of a successful payment procedure.

11. The computer program according to claim 10, further comprising program means for generating and/or decoding a one- or two-dimensional visual code (52) of vending details (56).

12. A method for processing a payment by means of a first and a second mobile device (16, 18), comprising the steps of:
- visually displaying encoded vending details (56) on the first mobile device (16),
- scanning or capturing the encoded vending details (56) provided on the first mobile device (16) by the second mobile device (18),
- transferring a payment order to a remote payment host (20),
- processing the payment order by the payment host (20),
- transferring a transaction confirmation (70, 72) to the first and/or to the second mobile device (16, 18) in response of a successful transaction.

13. The method according to claim 12, wherein a one- or two-dimensional visual code (52) of vending details (56) is generated by the first mobile device (16) on request of a merchant (12) when entering at least one vending detail (33) into the first mobile device (16).
